# EUROPEAN PATENT APPLICATION

(11) **EP 2 298 532 A1**
(43) Date of publication of application: **23.03.2011**
(21) Application number: 09754396.1
(22) Date of filing: 19.05.2009
(51) Int. Cl.: B29C 47/12, B29C 47/08, B29K 105/04, B29K 105/16

(54) **EXTRUSION APPARATUS**

(30) Priority: 26.05.2008 JP 2008137248
(71) Applicant: Wpc Corporation, Tokyo 108-0073 (JP)
(72) Inventor: KIKUCHI, Takeyasu, Tokyo 1080073 (JP)
(74) Representative: VALEA AB
(86) International application number: PCT/JP2009/002198
(87) International publication number: WO 2009/144887

(57) **Abstract**

Provided is an extrusion apparatus capable of forming a high-quality molded foam that has micro-airbubbles dispersed uniformly throughout the entirety thereof and that is as robust as a non-foamed article. The extrusion apparatus 1 in which a molding material 25a is made by heating, kneading, melting, and plasticizing a raw-material mixture 25 including at least foaming agent 26b, and the extrusion apparatus 1 includes an extruder 2 extruding the molding material to extrude it from a tip of a screw 5;an extrusion die 10 mounted at the tip end of the screw;and a molding die 15 mounted at an outlet 11b of the extrusion die. A breaker plate 12 that applies a restraining force counteracting an extrusion force to the molding material 25a extruded from the tip of the screw 5 andthat applies a back pressure towards the screw 5 is provided atan outlet 11b of the extrusion die 10, and a core 20 is provided that applies a restraining force counteracting an extrusion force to the molding material 25a extruded from the extrusion die 10 and that applies a back pressure to the molding material 25a in a direction toward the extrusion die 10.

## Description

### Field of the Invention

The present invention relates to extrusion apparatuses and, in particular, to an extrusion apparatus effective in forming various types of molded product injected or extruded by such as injection or extrusion foam molding (hereinafter called "molded foam") used for building materials, automobile interior/exterior materials, and so forth, particularly a molded product in the form of foamed synthetic wood board.

### Description of the Related Art

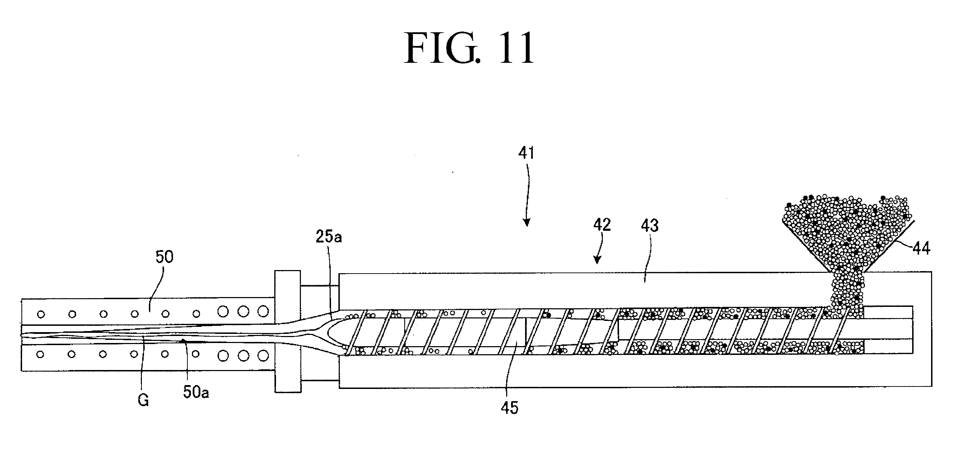

As shown in Fig. 11, an extrusion apparatus 41 including a cylindrical barrel 43; a screw 45 rotatably provided in this barrel 43; a driving source (not shown in the figure) for rotationally driving the screw 45; and a die 50 mounted at the tip end of the above-described screw 45 is known as one example of extrusion apparatuses for forming this type of molded foam.

In order to form a molded foam using the extrusion apparatus 41 with such a structure, for example, a mixture of wood meals, thermoplastic resin, pigment, reinforcing agent, and foaming agent 26b, blended at a predetermined compounding ratio, is prepared as a raw-material mixture; this raw-material mixture is supplied into the barrel 43; an extrusion force is applied towards the tip of the screw 45 by rotationally driving the screw 45 through the operation of the driving source to pressure-feed the raw-material mixture while it is being heated and kneaded; and the raw-material mixture is extruded as a melted and plasticized molding material 25a from the tip of the screw 45 into a molding chamber 50a of the die 50, thereby forming a molded foam having a cross-sectional shape equivalent to that of the molding chamber 50a (refer to, for example, Patent Document 1).

Information on prior art references of the present invention is as follows.
Patent Document 1: Japanese Patent KOKAI (LOPI) No. 8-118452
Patent Document 2: Japanese Patent KOKAI (LOPI) No. 2002-273778

### Disclosure of the Invention

### Problem to be Solved by the Invention

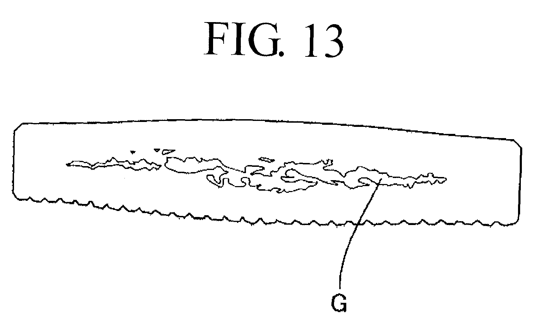

However, when a molded foam is formed using the extrusion apparatus 41 with such a structure, the foaming agent contained in the molding material 25a foams in the barrel 43, and the molding material 25a containing generated air bubbles is extruded into the molding chamber 50a of the die 50. Therefore, not only do the air bubbles collect at the center portion of the molding chamber 50a when the pressure is released in the molding chamber 50a, but also the air bubbles further collect at the center portion (core portion) in the width direction of the molded foam as a result of cooling in the molding chamber 50a, thus generating an internal defect due to an internal void G, which is larger than a so-called "nest." For this reason, a rectangular shape in cross section of the molded plate cannot be ensured because the central portion of the molded plate swells in both directions in the thickness direction at the center in the width direction along the longitudinal direction, and as a result, the molded plate cannot be used as a product. Furthermore, the strength is so low that a molded foam having a quality as high as that of a non-foamed article cannot be manufactured on a commercial basis or is difficult to manufacture even at an experimental level (Fig. 13). In Fig. 13, to ensure strength, a saw-toothed groove is formed at the lower side of the molded plate along the longitudinal direction.

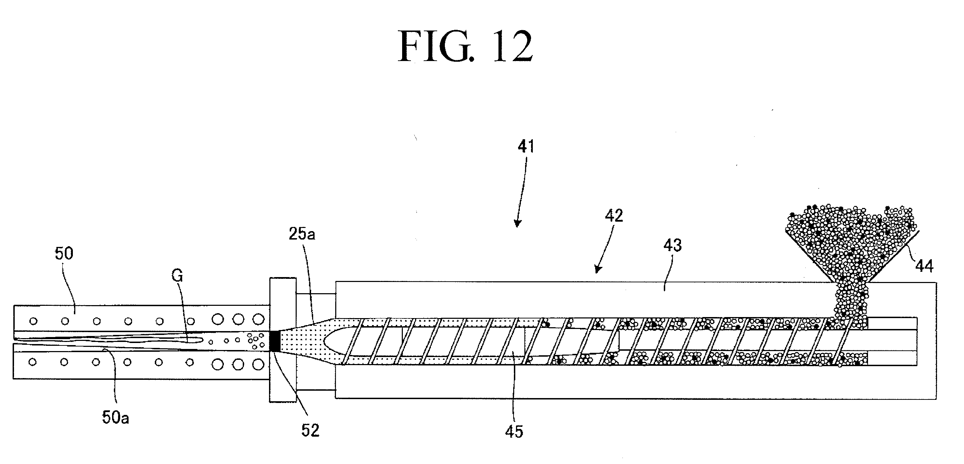

On the other hand, in order to solve the above-described problem, a breaker plate 52 in the form of a screen composed of a plurality of meshes is provided at an inlet of the die 50, as shown in Fig. 12; a back pressure (force pushing the molding material back in the extrusion direction) is applied towards the barrel 43 backwards from the breaker plate 52 by extruding the molding material 25a towards the die 50 through the meshes of the breaker plate 52; and the internal pressure of the barrel 43 is increased with this back pressure to inhibit the foaming agent contained in the molding material 25a from foaming in the barrel 43.

However, when a molded foam is formed using the extrusion apparatus 41 with such a structure, the foaming agent contained in the molding material 25a foams as a result of the pressure being released when the molding material 25a is extruded towards the die 50 through the screen composed of meshes of the breaker plate 52, and the molding material 25a in this state is extruded into the molding chamber 50a and cooled. Therefore, like the conventional means shown in Fig. 11, air bubbles collect at the center portion (core portion) of the molded foam formed in the molding chamber 50a, and the internal void G shown in Fig. 13 is inevitably produced. This makes it difficult to achieve a molded foam with high strength.

The present invention has been conceived in light of the above-described known problem, and an object thereof is to provide an extrusion apparatus capable of forming a high-quality molded foam that has micro-airbubbles dispersed uniformly throughout the entirety thereof and that is as robust as a non-foamed article.

Means for solving the problem are described below with reference numerals in the embodiments and examples of the present invention. These reference numerals are intended to clarify the correspondence between the descriptions in the claims and the descriptions in the embodiments and examples of the present invention, and it is needless to say that these reference numerals should not be used to restrictively interpret the technical scope of the claims of the present invention.

### Means for Solving the Problems

The present invention employs the following means to solve the above-described problem.

More specifically, the present invention is an extrusion apparatus 1 in which a molding material 25a is made by heating, kneading, melting, and plasticizing a raw-material mixture 25 including at least foaming agent 26b, and the extrusion apparatus 1 includes an extruder 2 that applies an extrusion force to the molding material to extrude it from a tip of a screw 5; an extrusion die 10 mounted at the tip end of the screw; and a molding die 15 mounted at an outlet 11b of the extrusion die. A breaker plate 12 that applies a restraining force counteracting an extrusion force to the molding material 25a extruded from the tip of the screw 5 and that applies a back pressure towards the screw 5 is provided at an outlet 11b of the extrusion die 10, and a core 20 that applies a restraining force counteracting an extrusion force to the molding material 25a extruded from the extrusion die 10 and that applies a back pressure to the molding material 25a in the outlet 11b of the extrusion die 10 is provided at an inlet 15a of the molding die 15.

According to the extrusion apparatus 1 of the present invention, when the molding material 25a, including at least the foaming agent 26b, extruded from the tip of the screw 5 is to be extruded towards the molding die 15 through the extrusion die 10, the breaker plate 12 at the outlet 11b of the extrusion die 10 applies a restraining force counteracting the extrusion force to the molding material 25a. As a result, a back pressure is produced towards the screw 5, and this back pressure increases the internal pressure of a barrel 3, thus suppressing foaming from the foaming agent 26b contained in the molding material 25a in the barrel 3. In other words, the foaming agent 26b can be inhibited from gasifying.

Furthermore, when the molding material 25a is to be extruded from the extrusion die 10 into the molding die 15 through the breaker plate 12, the core 20 at the inlet 15a of the molding die 15 applies a restraining force counteracting the extrusion force to the molding material 25a. As a result, a back pressure is applied towards the back (on the breaker plate 12 side) in the extrusion direction of the core 20, and this back pressure increases the internal pressure between the above-described core 20 and the above-described breaker plate 12, thus inhibiting foaming of the foaming agent 26b contained in the molding material 25a located at that portion in the molding material to prevent air bubbles from collecting thereat.

In addition, as a result of a restraining force counteracting the extrusion force being applied by the core 20 to the molding material 25a extruded to a molding chamber 15c, the pressure of the molding material 25a extruded to the molding chamber 15c is increased, the rate of extruding the molding material 25a into the molding chamber 15c is increased, and the entire molding chamber 15c is uniformly filled with the molding material 25a. Then, although the molding material 25a is pressurized in the molding chamber even after being sent into the molding chamber 15c, the pressure is relatively released, thus substantially uniformly dispersing air bubbles all over the molded foam to be formed.

According to the extrusion apparatus 1 of the present invention, when the molding material 25a, including at least the foaming agent 26b, extruded from the tip of the screw 5 is to be extruded towards the molding die 15 through the extrusion die 10, the breaker plate 12 at the outlet of the extrusion die 10 applies a restraining force counteracting the extrusion force to the molding material 25a. As a result, a back pressure is applied towards the screw 5, and this back pressure increases the internal pressure of the barrel 3, thus inhibiting foaming of the foaming agent 26b contained in the molding material 25a in the barrel 3.

Furthermore, when the molding material 25a is to be extruded from the extrusion die 10 into the molding die 15 through the breaker plate 12, the core 20 at the inlet of the molding die 15 further applies a restraining force counteracting the extrusion force to the molding material 25a. As a result, a back pressure is applied towards the back (on the breaker plate 12 side) in the molding material extrusion direction of the core 20, and this back pressure increases the internal pressure at that portion, thus inhibiting foaming of the foaming agent 26b contained in the molding material 25a located at that portion.

In addition, as a result of a restraining force counteracting the extrusion force being applied by the core 20 to the molding material 25a extruded to the molding chamber 15c, the pressure of the molding material 25a extruded to the molding chamber 15c is increased, the rate of extruding the molding material 25a into the molding chamber 15c is increased, and the entire molding chamber 15c is uniformly filled with the molding material 25a to release the pressure relatively, thus substantially uniformly dispersing air bubbles all over the molded foam formed in the molding chamber 15c.

The breaker plate 12 can have a volume-reducing section 13 including a plurality of slits or holes with cross sections whose volumes decrease gradually from the screw 5 towards the molding die 15, and a back pressure can be produced towards the screw 5 by the plurality of slits or holes of the volume-reducing section 13.

According to the extrusion apparatus 1 of the present invention, the volume-reducing section 13 including a plurality of slits or holes in the breaker plate 12 applies a restraining force counteracting the extrusion force to the molding material 25a extruded from the screw 5 to the molding die 15. As a result, a back pressure is applied towards the screw 5, and this back pressure increases the internal pressure of the barrel 3 to inhibit foaming of the foaming agent 26b contained in the molding material 25a in the barrel 3.

Furthermore, the core 20 can have a restraining section 22 including a plurality of holes or slits whose volumes decrease gradually from the extrusion die 10 towards the molding die 15, and a back pressure can be applied towards the extrusion die 10 by the plurality of holes or slits of the restraining section.

According to the extrusion apparatus 1 of the present invention, the restraining section 22 including a plurality of slits or holes 21b in the core 20 applies a restraining force counteracting the extrusion force to the molding material 25a extruded to the molding die 15 through the core 20, and a back pressure is applied towards the back (extrusion die 10) in the extrusion direction of the molding material 25a of the core 20. This back pressure increases the pressure at that portion, thus inhibiting foaming of the foaming agent 26b contained in the molding material 25a located at that portion and preventing air bubbles from collecting thereat.

In addition, as a result of a restraining force counteracting the extrusion force being applied by the restraining section 22 including a plurality of holes 21b or slits in the core 20 to the molding material 25a extruded to the molding die 15 through the core 20, the pressure of the molding material 25a extruded to the molding chamber 15c is increased, the rate of extruding the molding material 25a into the molding chamber 15c is increased, and the entire molding chamber 15c is uniformly filled with the molding material 25a to release the pressure relatively, thus substantially uniformly dispersing air bubbles all over the molded foam formed in the molding chamber 15c.

Furthermore, the core 20 has a main body 21 with a cross-sectional shape matching a cross-sectional shape of the inlet 15a of the molding die 15, and the plurality of holes 21b or slits of the restraining section 22 are provided throughout the entirety of the main body 21.

According to the extrusion apparatus 1 of the present invention, the restraining section 22 including a plurality of holes 21b or slits provided all over the main body 21 of the core 20 applies a restraining force counteracting the extrusion force to the molding material 25a extruded to the molding die 15 through the core 20, and a back pressure is applied towards the back (towards the extrusion die 10) in the extrusion direction of the main body 21 of the core 20. This back pressure increases the pressure at that portion, thus inhibiting foaming of the foaming agent 26b contained in the molding material 25a located at that portion.

In addition, as a result of a restraining force counteracting the extrusion force being applied by the restraining section 22 including a plurality of holes 21 b or slits in the main body 21 of the core 20 to the molding material 25a, the pressure of the molding material 25a extruded to the molding die 15 through the core 20 is increased, the rate of extruding the molding material 25a to the molding die 15 is increased, and the pressure is released relatively while the entire molding chamber 15c is uniformly filled with the molding material 25a, thus substantially uniformly dispersing air bubbles all over the molded foam formed in the molding chamber 15c.

Furthermore, in the case that a lead-in portion 23 for the molding material 25a extruded from the extrusion die 10 is provided at the main body 21 of the core 20, the plurality of holes 21 b or the plurality of slits of the restraining section 22 can be constructed to communicate with the lead-in portion 23.

According to the extrusion apparatus 1 of the present invention, the molding material 25a extruded from the extrusion die 10 to the molding die 15 through the breaker plate 12 is extruded from the lead-in portion 23 of the main body 21 of the core 20 at the inlet 15a of the molding die 15 into the molding chamber 15c of the molding die 15 through the restraining section 22 including a plurality of holes 21 b or slits.

Furthermore, the raw-material mixture 25 can be produced by mixing, at a predetermined compounding ratio, foaming agent 26b and, as required, another additive with raw material pellets 26a made by melting, kneading, cooling, crushing, and particle-regulated wood meals, resin, pigment, and reinforcing agent that constitute a raw material of synthetic wood powder, thus manufacturing a foam-molded synthetic wood product.

### Effect of the Invention

As described above, according to the extrusion apparatus described in Claim 1 of the present invention, the breaker plate 12 at the outlet of the extrusion die 10 applies a restraining force counteracting the extrusion force to the molding material 25a; a back pressure generated towards the screw 5 increases the internal pressure of the barrel 3; the foaming agent 26b contained in the molding material 25a in the barrel 3 is inhibited from foaming; the core 20 at the inlet 15a of the molding die 15 applies a restraining force counteracting the extrusion force to the molding material; this applied restraining force can apply a back pressure between the core 20 and the breaker plate 12 located backwards in the extrusion direction of the molding material 25a of this core 20; this back pressure increases the internal pressure between the core 20 and the above-described breaker plate 12; and the foaming agent 26b contained in the molding material 25a at this portion can be inhibited from foaming.

Furthermore, the core 20 applies a restraining force counteracting the extrusion force to the molding material 25a extruded to the molding chamber 15c; the pressure of the molding material 25a is increased to increase the density; the molding time of the molded foam is not extended without decreasing the extrusion rate; and the pressure is relatively released while the entire molding chamber 15c is uniformly filled with the molding material 25a. Therefore, micro-airbubbles can be substantially uniformly dispersed all over the molded foam, thus allowing a molded foam having a strength equivalent to that of a desired non-foamed article to be formed.

In addition, according to the extrusion apparatus described in Claim 2 of the present invention, the volume-reducing section 13 of the breaker plate 12 applies a restraining force counteracting the extrusion force to the molding material 25a, a back pressure generated towards the screw 5 increases the internal pressure of the barrel 3, and the foaming agent 26b contained in the molding material 25a in the barrel 3 can be inhibited from foaming.

Furthermore, according to the extrusion apparatus described in Claim 3 of the present invention, the volume-reducing section 13 of the core 20 can apply a restraining force counteracting the extrusion force to the molding material 25a extruded to the molding die 15 through the core 20, this restraining force can apply a back pressure towards the back (on the extrusion die 10 side) in the extrusion direction of the core 20, this back pressure can increase the pressure between the above-described core 20 and the breaker plate 12 located towards the back in the extrusion direction of the molding material 25a of this core 20, and the foaming agent 26b contained in the molding material 25a at this portion can be inhibited from foaming.

In addition, as a result of a restraining force counteracting the extrusion force being applied by the restraining section 22 including a plurality of slits or holes in the core 20 to the molding material 25a extruded to the molding die 15 through the core 20, the pressure of the molding material 25a extruded to the molding chamber 15c is increased to increase the density of the molding material, and.the rate of extruding the molding material 25a into the molding chamber 15c can be increased. Therefore, the molding rate of the molded foam can be increased, the pressure is relatively released while the entire molding chamber 15c is uniformly filled with the molding material 25a, air bubbles can be dispersed substantially uniformly all over the molded foam formed in the molding chamber 15c, and a molded foam having a strength equivalent to that of a desired non-foamed article can be formed.

Furthermore, according to the extrusion apparatus described in Claim 4 of the present invention, the restraining section 22 including a plurality of slits or holes provided all over the main body 21 of the core 20 applies a restraining force counteracting the extrusion force to the molding material 25a extruded to the molding die 15 through the core 20, this restraining force can apply a back pressure towards the back (on the extrusion die 10 side) in the extrusion direction of the main body 21 of the core 20, this back pressure can increase the pressure at that portion, and the foaming agent 26b contained in the molding material 25a located at that portion can be inhibited from foaming.

In addition, as a result of a restraining force counteracting the extrusion force being applied by the restraining section 22 including a plurality of slits or holes in the main body 21 1 of the core 20 to the molding material 25a, the pressure of the molding material 25a extruded to the molding die 15 through the core can be increased. Therefore, the rate of extruding the molding material into the molding die 15 can be increased, the molding rate of the molded foam can be increased, the pressure is released relatively while the entire molding chamber 15c is uniformly filled with the molding material 25a, air bubbles can be dispersed substantially uniformly all over the molded foam formed in the molding chamber 15c, and a molded foam having a strength equivalent to that of a desired non-foamed article can be formed.

Furthermore, according to the extrusion apparatus described in Claim 5 of the present invention, the molding material 25a extruded from the extrusion die 10 to the molding die 15 through the breaker plate 12 is extruded from the lead-in portion 23 formed in the main body 21 of the core 20 at the inlet of the molding die 15 into the molding chamber 15c of the molding die 15 through the restraining section 22 including a plurality of slits or holes. Therefore, some of the foaming agent 26b contained in the molding material foams without causing air bubbles to collect in the molding material 25a even at the lead-in portion 23, and the molding material in that state has its pressure increased as a result of its flow being controlled by the restraining section 22 including a plurality of slits or holes in the main body 21 of the core 20 and is then extruded into the molding chamber 15c in this state. Therefore, air bubbles can be dispersed substantially uniformly all over the molded foam formed in the molding chamber 15c, and a molded foam having a strength equivalent to that of a desired non-foamed article can be formed.

It should be noted that instead of forming the above-described lead-in portion 23 in the core 20, the molding material 25a may be pressure-fed directly from the breaker plate 12 to the restraining section 22 of the core 20. Also in this case, the composition of a raw material as described later in Table 1, without causing air bubbles to collect or generating an internal void (nest) G, was achieved by experiment. This is probably because a single cell of air bubbles is robust due to the high melt tension and melt viscosity of the raw material resin, inhibiting air bubbles from collecting.

### Brief Description of the Drawings

Fig. 1 is a schematic diagram showing one embodiment of an extrusion apparatus according to the present invention;
Fig. 2 is a front elevational view of a breaker plate as seen from the front in the extrusion direction;
Fig. 3(A) is a cross-sectional view taken along line A-A in Fig. 2, Fig. 3(B) is a cross-sectional view of a rectifying section of an extrusion die taken along line A-A in Fig. 2, and Fig. 3(C) is a cross-sectional view of a breaker plate in combination with an extrusion die rectifying section in Fig. 2;
Fig. 4 is a cross-sectional view taken along line IV-IV in Fig. 2;
Fig. 5 is a rear elevational view of a breaker plate as seen from the back in the extrusion direction;
Fig. 6 is a plan view of a core;
Fig. 7 is a front elevational view of a core as seen from the front in the extrusion direction;
Fig. 8 is a rear elevational view of the core in Fig. 6 as seen from the back in the extrusion direction;
Fig. 9 is a cross-sectional view taken along line IX-IX in Fig. 6;
Fig. 10 is an illustration showing one example of a manufacturing line using an extrusion apparatus according to the present inventions;
Fig. 11 is a schematic diagram showing one example of a conventional extrusion apparatus;
Fig. 12 is a schematic diagram showing another example of a conventional extrusion apparatus; and
Fig. 13 is a cross-sectional view of a relevant part showing an internal void (nest) produced in a molded product by a conventional extrusion apparatus.

### Best Mode for Carrying Out the Invention

Embodiments according to the present invention will now be described with reference to the drawings.

### Extrusion Apparatus

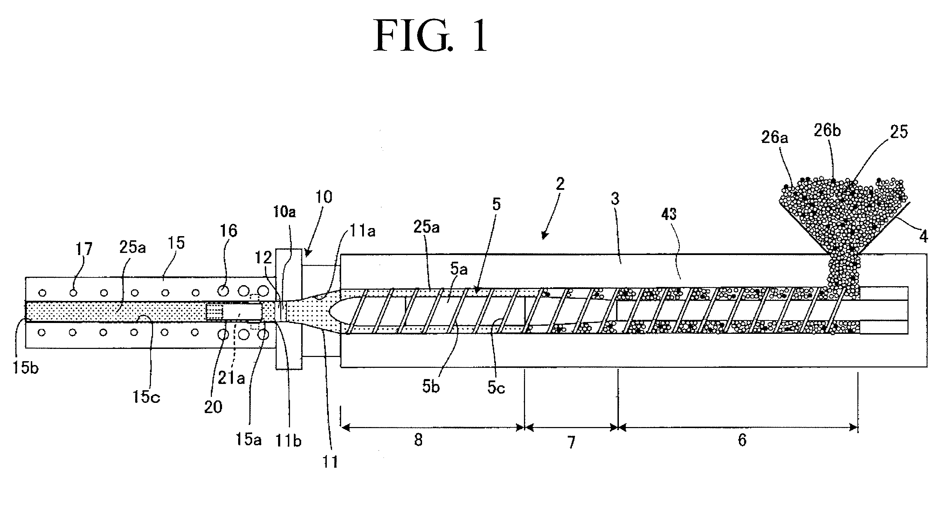

Figs. 1 to 9 show one embodiment of an extrusion apparatus according to the present invention.

As shown in Fig. 1, an extrusion apparatus 1 of this embodiment includes a screw extruder 2 and an extrusion die 10 and a molding die 15 that are detachably attached to this screw extruder 2 and includes the extrusion die 10 mounted forwards in the extrusion direction of the above-described extruder 2, a breaker plate 12 detachably provided on this extrusion die 10, and a core 20 detachably provided on the above-described molding die 15.

### Extruder

The above-described screw extruder 2 is an extruder including a screw 5 that extrudes a raw-material mixture 25, which is, for example, a melted and plasticized molding material 25a produced by heating, kneading, melting, and plasticizing a mixture of raw material pellets 26a, foaming agent 26b, and, as required, another additive blended at a predetermined compounding ratio, where the raw material pellets 26a are produced by melting, gelling, kneading, cooling, crushing, and size-regulating a mixture of wood meals, resin, pigment, and reinforcing agent serving as a raw material of synthetic wood powder.

Although this embodiment is described by way of an example where the extrusion apparatus 1 according to the present invention is applied to the uniaxial screw extruder 2, the present invention can also be applied to various types of screw extruders, such as a biaxial type, a multiaxial type, or a screw extruder that is a combination of those types.

The uniaxial screw extruder 2 (hereinafter, referred to as "the extruder 2") includes a barrel 3; the screw 5 rotatably provided in this barrel 3; and a driving source (not shown in the figure) composed of a speed-reducing gear, a motor, and so forth to rotationally drive this screw 5. The extrusion die 10 and the molding die 15, described later, are detachably attached to the tip end (forwards in the extrusion direction, to the left in Fig. 1) of the barrel 3.

The barrel 3 has a cylindrical body whose tip in the extrusion direction is open and whose rear end (backwards in the extrusion direction, to the right in Fig. 1) is closed. A hopper 4 that communicates between the interior and the exterior of the barrel 3 is provided above the rear end, and the raw-material mixture 25 in the form of a mixture of the raw material pellets 26a composed of synthetic wood powder and the foaming agent 26b is supplied into the barrel 3 through this hopper 4.

At the outer circumferential portion of the barrel 3, heating means (not shown in the figure), such as a band heater, is provided over the entire length of the barrel 3 such that it is wound or wrapped around the barrel 3, and the raw-material mixture 25 supplied into the barrel 3 is heated with this heating means. The barrel 3 is divided into a plurality of zones (e.g., a supply zone, a compression zone, and a metering zone) along its entire length and is constructed such that the zones can be temperature-controlled individually with the heating means.

The screw 5 includes a round-bar-shaped rotating shaft 5a rotatably provided at the center of the barrel 3 and screw sections 5b provided helically around and integrally with this rotating shaft 5a. The rear end (to the right in Fig. 1) of the rotating shaft 5a protrudes backwards from the rear end of the barrel 3 so that the protruding portion can be linked with the driving source to allow the rotating shaft 5a and the screw sections 5b to be rotationally driven together by the operation of the driving source.

The area of the barrel 3 in which the screw 5 is disposed includes a supply section 6, disposed on the right side in Fig. 1, for supplying the raw-material mixture 25; a compression section 7, disposed to the left of this supply section 6 in Fig. 1, for heating, kneading, and compressing the raw-material mixture 25 supplied from the supply section 6; and a metering section 8, disposed to the left of this compression section 7 in Fig. 1, for metering the raw-material mixture 25 supplied from the compression section 7.

When the screw 5 is rotationally driven by the operation of the driving source, the raw-material mixture 25 supplied from the hopper 4 into the barrel 3 is pressure-fed towards the tip of the screw 5 along a groove 5c between the screw sections 5b of the screw 5 while being heated and kneaded in coordination with the supply section 6, the compression section 7, and the metering section 8 of the screw 5. Thus, the raw-material mixture 25 in the form of the melted and plasticized molding material 25a is pressed out of the barrel 3 from the tip of the screw 5 by the extrusion force applied to the molding material.

### Extrusion Die

The extrusion die 10 not only rectifies the molding material 25a extruded from the tip of the screw 5 but also supplies the molding material 25a with a desired cross-sectional shape and is detachably attached to the tip end of the barrel 3 with, for example, a bolt.

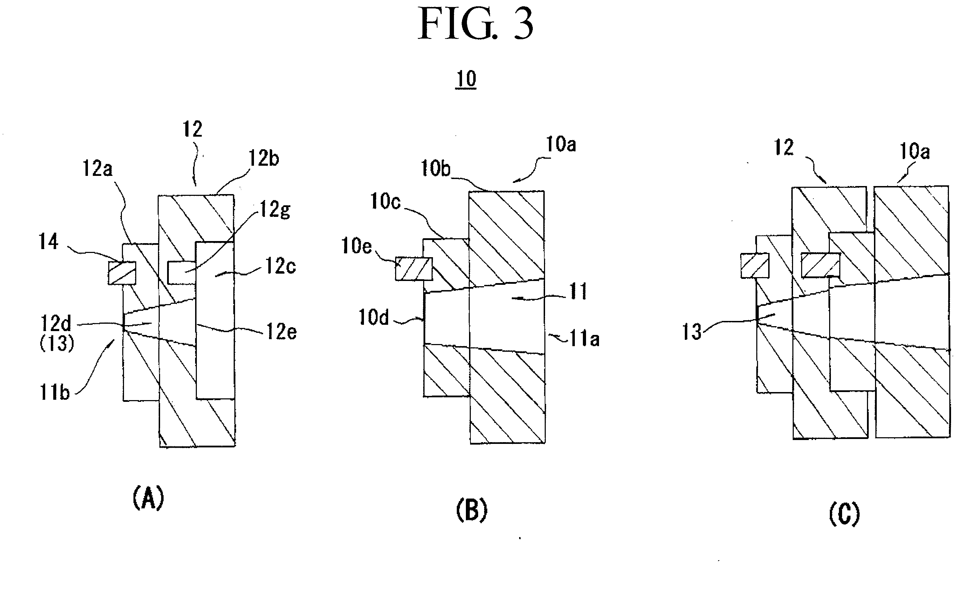

A rectifying section 10a that rectifies and sends the molding material 25a to the breaker plate 12, described later, is fixed in an engaged manner in the extrusion die 10. In the rectifying section 10a, a small-diameter portion 10c of a corresponding outer circumferential shape that compactedly fits into a concave portion 12c of the breaker plate 12, described later, is formed integrally with a large-diameter portion 10b. The rectifying section 10a is constructed so as to have a cross-sectional shape that decreases the volume gradually from an inlet 11 a of the extrusion die 10 located backwards in the extrusion direction of the molding material 25a towards a rectifying section outlet 10d located forwards in the extrusion direction. The size of this rectifying section 10a in the width direction is substantially equivalent to the length in the width direction of an inlet 12e having the total length of a plurality of slits 12d (121d to 121d) that open in the bottom surface of the concave portion 12c of the breaker plate 12, described later, and the height of the rectifying section outlet 10d is equivalent to the height of the above-described inlet 12e (Figs. 3(B) and 3(C)).

Moreover, there is provided an extrusion hole 11 where the inlet 11a of the above-described extrusion die 10 communicates with the opening at the tip of the barrel 3 and an outlet 11b communicates with an inlet 15a of the molding die 15, described later. The molding material 25a extruded from the tip of the screw 5 through this extrusion hole 11 is extruded into the molding die 15, described later.

The extrusion hole 11 in the extrusion die 10 is formed to have a tapered cross-sectional shape (trapezoidal in cross section in this embodiment) so as to decrease its volume from the barrel 3 towards the molding die 15, and the breaker plate 12 is mounted at the outlet 11b of the extrusion hole 11 in this extrusion die 10.

### Breaker Plate

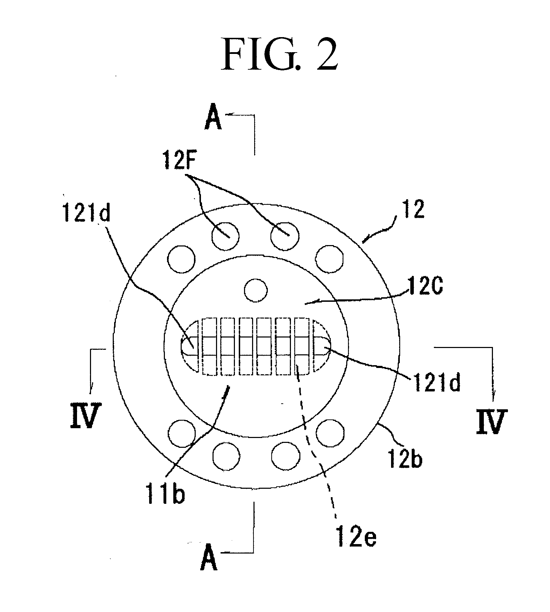

As shown in Figs. 2 to 5, the breaker plate 12 is a disc-shaped member whose circumferential surface is formed to have a small-diameter portion 12a and a large-diameter portion 12b in two stages and is mounted at the tip end of the barrel 3 such that the rear side in the extrusion direction (hidden side of the drawing in Fig. 2) faces the screw 5 and that the front side in the extrusion direction (visible side of the same drawing) faces the molding die 15, described later.

As shown in Figs. 3 to 5, the circular concave portion 12c of a predetermined depth is provided at the central portion towards the back (on the right side of the drawing in Fig. 3(A)) in the extrusion direction of the breaker plate 12. At the center portion of this concave portion 12c, there are provided a plurality of meshes, holes, or slits 12d (eight slits 12d (, 121d in this embodiment) that penetrate in the extrusion direction passing through the bottom surface of the concave portion 12c and the front surface (on the left side of the drawing in Fig. 3(A)) of the breaker plate 12, and the molding material 25a extruded from the screw 5 is extruded through this plurality of slits 12d into the molding die 15. In this case, the molding material 25a extruded from the screw 5 is rectified into the concave portion 12c of the breaker plate 12 by the above-described rectifying section 10a of the extrusion die 10, introduced into each of the slits 12d, and extruded to the molding die 15 through each of the slits 12d.

Each of the slits 12d is formed to have a cross-sectional shape whose volume decreases gradually from the inlet 12e opening in the bottom surface of the concave portion 12c of the breaker plate 12 communicating with the rectifying section outlet 10d of the extrusion die 10 towards the outlet 11b of the extrusion hole 11 towards the front in the extrusion direction. These slits 12d produce a back pressure towards the screw 5 backwards in the above-described molding material extrusion direction of the breaker plate 12 and function as a volume-reducing section 13 that inhibits foaming into gas of the foaming agent 26b contained in the molding material 25a melted and plasticized in the barrel 3.

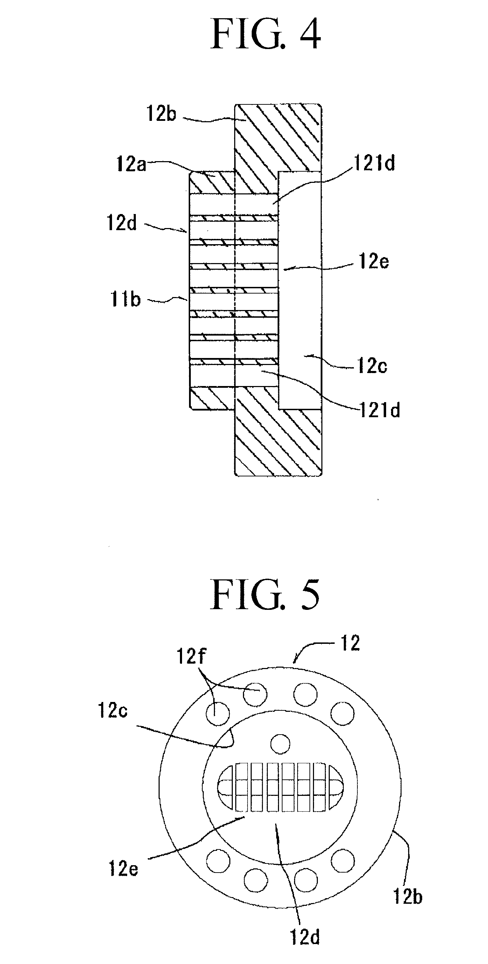

In this case, of the eight slits 12d, the six slits 12d except the two slits 121d and 121d at both ends have inclined surfaces at the upper and lower surfaces in Fig. 3(A) and vertical surfaces at both side surfaces in Fig. 5, that is, are formed in a planar trapezoid that is rectangular in cross section. Each of the two slits 121d and 121d at both ends is formed in a planar trapezoid that is substantially rectangular in cross section, having inclined surfaces at the upper and lower surfaces in Fig. 3 (A) and a curved surface at the left side surface or the right side surface in Fig. 5.

A plurality of insertion holes 12f that penetrate in the front/back direction of the above-described molding material extrusion direction are provided at the periphery of the breaker plate 12, and the breaker plate 12 is detachably mounted at the outlet 11b of the extrusion hole 11 in the extrusion die 10 with, for example, bolts by means of this plurality of insertion holes 12f.

Reference numeral 14 in Figs. 2 and 3(A) denotes a pin, which is a member attached by insertion into a pin hole provided on the extrusion die 10 end wall of the breaker plate 12 to determine the mounting position relative thereto. 12g denotes a pin hole provided in the breaker plate 12, and a pin 10e of the rectifying section 10a is attached by insertion into this pin hole for positioning (Fig. 3(B)).

Although in this embodiment the eight slits 12d (12d, 121d) are provided in the breaker plate 12 as described above, eight or fewer slits or nine or more slits may be provided. Furthermore, although each slit is formed to be trapezoidal in cross section, the shape is not limited to a trapezoid in cross section. Any shape that allows the volume to decrease gradually from back to front in the extrusion direction is acceptable. In addition, each hole is not limited to a slit. Each hole may be a circular or elliptical hole so that the volume decreases gradually in the above-described direction.

### Molding Die

The molding die 15 further rectifies the molding material 25a extruded through the breaker plate 12 at the outlet 11b of the extrusion hole 11 in the extrusion die 10 and produces a desired cross-sectional shape. As shown in Fig. 1, the molding die 15 is detachably attached to the outlet 11b of the extrusion hole 11 in the extrusion die 10 with, for example, a bolt.

In this case, the molding die 15 is attached to the outlet 11b of the extrusion hole 11 in the extrusion die 10 so that the inlet 15a communicates with the outlet 11b of the extrusion hole 11 in the extrusion die 10. A molding chamber 15c having the same continuous rectangular shape in cross section is provided in the molding die 15. When the molding material 25a extruded from the extrusion die 10 through the breaker plate 12 is introduced into this molding chamber 15c, the molding material 25a is supplied with a desired cross-sectional shape, that is, is formed into a flat plate having the same continuous rectangular shape in cross section in this embodiment, like the molding chamber 15c.

The inlet 15a of the molding die 15 is formed to be rectangular in cross section, communicating towards the front in the above-described extrusion direction of the breaker plate 12 provided at the outlet 11b of the extrusion hole 11 in the extrusion die 10. Continued with this inlet 15a, the molding chamber 15c, which is rectangular in cross section, whose longitudinal size is substantially equivalent to that of the inlet 15a and whose lateral size is larger than that of the inlet 15a, is formed in the molding die 15. Furthermore, a take-off machine 35, described later, is provided so as to face an outlet 15b of this molding chamber 15c.

Around the inlet 15a of the molding die 15, heating means 16 including, for example, a heater is provided so as to surround the inlet 15a. The molding material 25a supplied from the extrusion die 10 to the inlet 15a of the molding die 15 is heated by this heating means 16 to keep the molding material 25a in a desirable melted and plasticized state.

Around the molding chamber 15c of the molding die 15, cooling means 17 including, for example, a cooling tube for distributing a cooling medium is provided so as to surround the molding chamber 15c. The molding material 25a extruded into the molding chamber 15c is cooled by this cooling means 17 to form a molded foam matching the cross-sectional shape of the molding chamber 15c.

### Core

The core 20 is provided at the inlet 15a of the molding die 15.

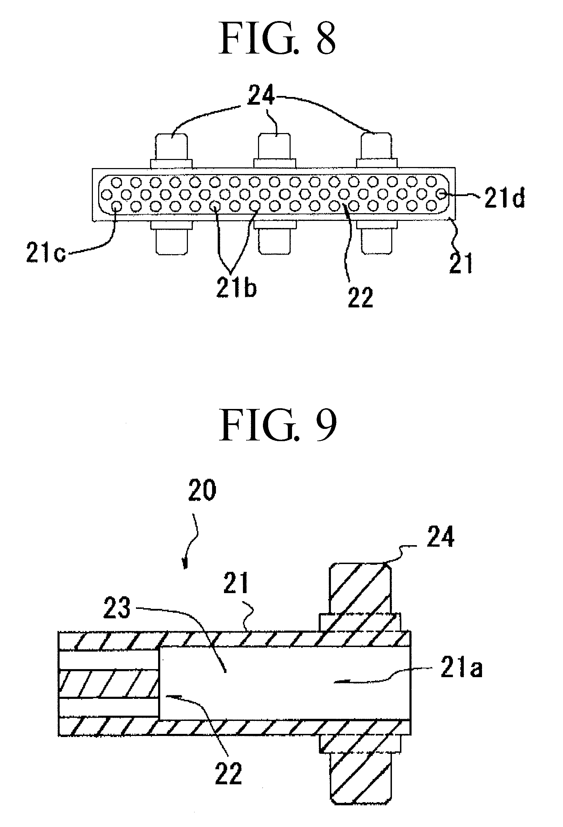

The core 20 includes a plate-shaped main body 21 with a cross-sectional shape matching the cross-sectional shape of the inlet 15a of the molding die 15; a restraining section 22 and a lead-in portion 23 according to the embodiment in the figure provided in this main body 21; and fixing sections 24 that are provided integrally with this main body 21 to fix the main body 21 to the inlet 15a of the molding die 15 (Fig. 9).

A concave portion 21 a that has a predetermined depth and that is rectangular in cross section is provided towards the back in the extrusion direction of the main body 21. A plurality of holes 21b that penetrate between the bottom surface of the concave portion 2 1 a and the left side surface in the same figure, towards the front in the extrusion direction of the main body 21, is provided in the bottom surface of the above-described concave portion 21a. The above-described concave portion 21 a constitutes the lead-in portion 23 that introduces the molding material 25a from the extrusion die 10, and the above-described plurality of holes 21b constitute the restraining section 22 that re-pressurizes the molding material 25a supplied from the above-described lead-in portion 23 and applies a back pressure towards the extrusion die 10.

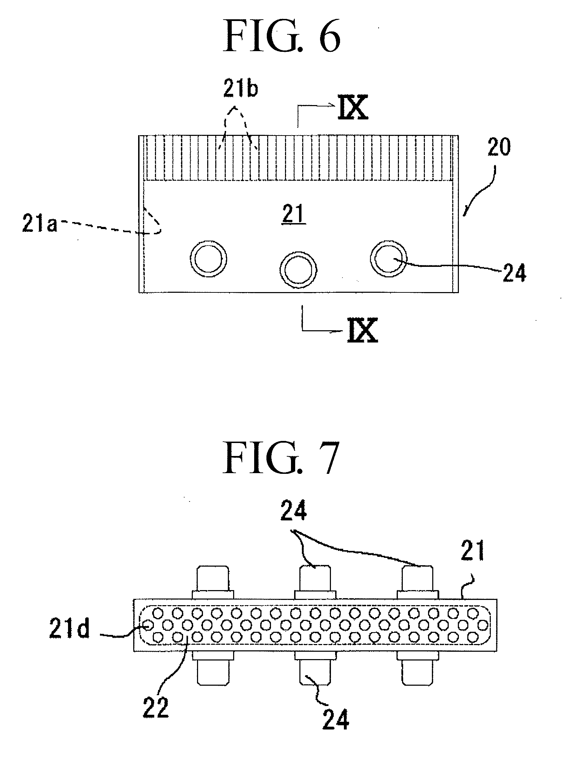

The plurality of holes 21b of the restraining section 22 are arranged in three rows in the thickness direction of the main body 21, and the plurality of holes 21 b (21 c, 21 c, and 21d) are provided in each row at regular intervals along the horizontal direction. In this case, the holes 21d in the center row are provided on the same vertical line, and the holes 21c in the upper row and the holes 21c in the lower row, located in the front and back direction of the drawing, are formed so that the holes 21c and 21c face each other and are arranged between the adjacent holes 21d in the center row, where 18 holes are made in the center row and 17 holes are made in each of the upper and lower rows (Fig. 7).

Although in this embodiment the plurality of holes 21b are provided in three rows in the main body 21, the holes 21b may be arranged in two or fewer rows or four or more rows. Alternatively, slits may be provided instead of holes so that a plurality of slits can constitute the restraining section 22.

The fixing sections 24 are cylindrical and are provided integrally at the central portion of the upper and lower surfaces of the main body 21 and at both sides thereof at intervals and are provided integrally at the central portion on the right edge of the lower surface of the main body 21 and at both sides thereof so as to correspond to the fixing sections 24 on the upper surface. These fixing sections 24 are made to fit into fixing holes (not shown in the figure) formed at the inlet 15a of the molding die 15 to fix the main body 21 at the inlet 15a of the molding die 15.

Although in this embodiment the main body 21 is formed into a flat plate, the main body 21 can be formed to have various types of shapes, such as a circle, ellipse, or semi-circle, according to the cross-sectional shape of the inlet 15a of the molding die 15.

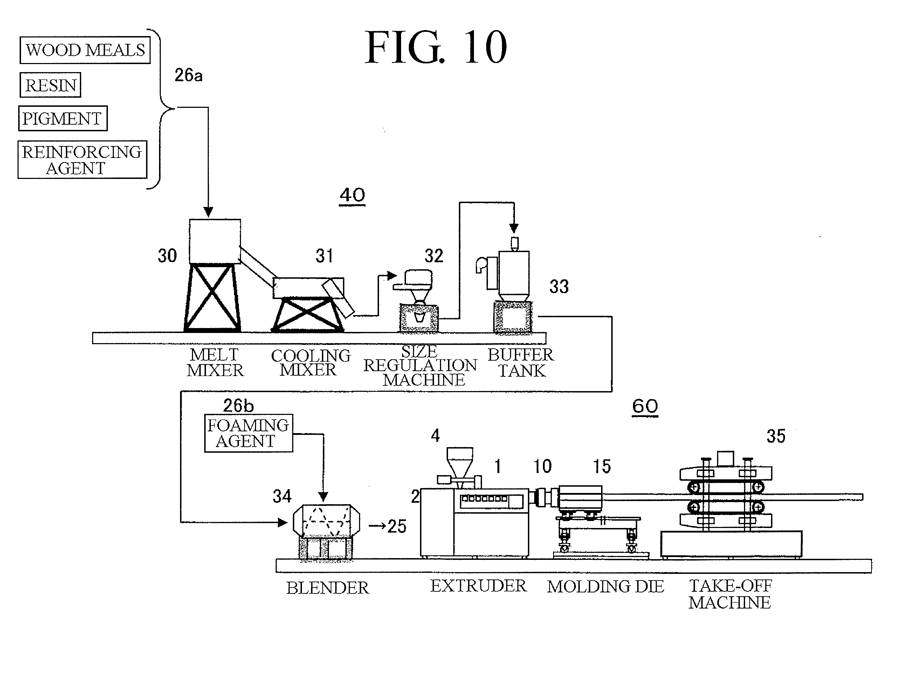

In this embodiment, the extrusion apparatus 1 with the above-described structure is used while incorporated in the line shown in Fig. 10 as a foam-molded synthetic wood product manufacturing line 60 for treating a composition of the above-described raw material pellets 26a and foaming agent, which is continuous with a manufacturing line 40 for synthetic wood powder, which constitutes the raw material pellets 26a.

### Raw-material mixture

### Raw Material Pellets

This synthetic wood powder manufacturing line 40 includes a melt mixer 30; a cooling mixer 31; a size regulation machine 32; and a buffer tank 33. The foam-molded synthetic wood product manufacturing line 60 is constructed by arranging a blender 34, the extrusion apparatus 1 according to this embodiment, and the take-off machine 35 in that order.

To form a desired molded foam using the manufacturing line 60 with such a structure, the raw material pellets 26a are manufactured on the synthetic wood powder manufacturing line 40 according to this embodiment.

More specifically, wood meals, resin, pigment, reinforcing agent, and so forth, serving as a raw material of synthetic wood powder, are delivered into the melt mixer 30 at a predetermined compounding ratio and are then melted and mixed; the raw material 25 melted and mixed by the melt mixer 30 is cooled by the cooling mixer 31; the mixture cooled by the cooling mixer 31 is crushed by the size regulation machine 32 to perform size-regulation into a predetermined grain size; and the raw material pellets 26a constituting the synthetic wood powder size-regulated into a predetermined grain size by the size regulation machine 32 are stocked in the buffer tank 33.

Next, the raw material pellets 26a are delivered from the buffer tank 33 to the blender 34 (e.g., a tilting mixer) of the foam-molded synthetic wood product manufacturing line 60; the foaming agent 26b is delivered from another line into the blender 34; the raw material pellets 26a and the foaming agent 26b are dry-blended at a predetermined compounding ratio to prepare the raw-material mixture 25; and the raw-material mixture 25 is supplied to the extrusion apparatus 1 according to this embodiment.

Here, as shown in Table 1, as a raw material of synthetic wood powder, a mixture with a compounding ratio of wood meals (50 to 200 µm); 51 to 53%, resin (thermoplastic resin) (random polypropylene; 18 to 20%, HDPE; 25%), pigment (iron oxide type); 3%, reinforcing agent (maleic modified polypropylene); 0.5%, and foaming agent (inorganic foaming-agent masterbatch); 0.5% is used.

As the resin, homopolypropylene, block polypropylene, or Containers/Packaging Recycling Act polypropylene may be used. As the reinforcing agent, METABLEN (trade name, Mitsubishi Rayon Co., Ltd.), which is an additive for increasing the melt viscosity and melt tension of resin, may be used. As the foaming agent, MB3064 (manufactured by Sankyo Kasei Co., Ltd.) or polythlene EE405F (manufactured by Eiwa Chemical Ind. Co., Ltd.) may be used.

**[Table 1]**

| | | | |
|---|---|---|---|
| Composition Table | | | |

| Kind of material | Grade | Part No. | Compounding ratio (%) |
|---|---|---|---|
| Wood meals | 50 to 200 µm | Kaneki, A-100 | 51 to 53 |
| Resin | Random PP | Recycled pulverized product (SunAllomer Ltd., PB222A) | 18 to 20 |
| | HDPE | Pulverized bottle product | 25 |
| Pigment | Iron oxide type | Toda Kogyo Corp., Brown 710 | 3 |
| Reinforcing agent | Maleic modified PP | Sanyo Chemical Industries, Ltd., Yumex 1010 | 0.5 |
| Foaming Agent | Inorganic foaming-agent masterbatch | Sankyo Kasei Co., Ltd., MB3074 | 0.5 |

### Extrusion Process

Now, as shown in Fig. 1, the raw-material mixture 25 is supplied into the barrel 3 of the extruder 2 of the extrusion apparatus 1 through the hopper 4; the screw 5 is rotationally driven by the operation of the driving source to supply the raw-material mixture 25 from the hopper 4 into the barrel 3; and an extrusion force is applied towards the tip of the screw 5 along the groove 5c at the screw sections 5b of the screw 5 while the raw-material mixture 25 is being heated and kneaded in coordination with the operation of the heating means and the screw 5 to pressure-feed the raw-material mixture 25, thereby forming the melted and plasticized molding material 25a.

Then, this melted and plasticized molding material 25a is extruded from the tip of the screw 5 into the extrusion hole 11 in the extrusion die 10, extruded into the molding die 15 through the plurality of slits 12d in the breaker plate 12 at the outlet 11b of the extrusion hole 11, introduced into the molding chamber 15c of the molding die 15 through the plurality of holes 21b in the core 20 at the inlet 15a of the molding die 15, pressed out of the molding die 15 from the outlet 15b of the molding chamber 15c, and transferred to the take-off machine 35 provided adjacent to the extruder 2. The density of the molded product in the molding chamber 15c is adjusted by the take-off machine 35 at a predetermined take-off rate to form a desired molded foam.

In this case, the molding material 25a extruded from the tip of the screw 5 into the extrusion hole 11 in the extrusion die 10 is introduced to the breaker plate 12 at the outlet 11b through the extrusion hole 11, introduced from the concave portion 12c towards the back in the extrusion direction of the breaker plate 12 to the plurality of slits 12d in the volume-reducing section 13, and extruded to the inlet 15a in the molding die 15 through the plurality of slits 12d. At this time, the plurality of slits 12d in the volume-reducing section 13 produce a back pressure inside the barrel 3 to increase the internal pressure of the barrel 3. Therefore, the foaming agent 26b contained in the molding material 25a is inhibited from foaming in the barrel 3 and in the extrusion hole 11 of the extrusion die 10, thereby allowing the stable molding material 25a to be supplied from the extrusion die 10 to the molding die 15.

Furthermore, the molding material 25a extruded to the inlet 15a of the molding die 15 through the plurality of slits 12d in the breaker plate 12 is introduced to the main body 21 of the core 20 provided at the inlet 15a of the molding die 15, introduced from the lead-in portion 23 defined by the concave portion 21a of the main body 21 into the plurality of holes 21b in the restraining section 22, and extruded into the molding chamber 15c of the molding die 15 through the plurality of holes 21b. At this time, the molding material 25a extruded from the plurality of slits 12d in the breaker plate 12 towards the extrusion die 10 is supplied with a back pressure by the plurality of holes 21b in the restraining section 22 to increase the pressure of the molding material 25a located at that portion. Therefore, the foaming agent contained in the molding material 25a located at that portion is inhibited from foaming.

Furthermore, when the molding material 25a whose foaming agent 26b has been inhibited from foaming between the main body 21 of the core 20 and the breaker plate 12 is extruded into the molding chamber 15c of the molding die 15 through the plurality of holes 21b in the restraining section 22 of the main body 21 of the core 20, the extrusion force of the extruded material is restricted between the core 20 and the breaker plate 12 located towards the back in the molding material 25a extrusion direction of this core 20, thereby increasing the pressure again. This molding material 25a with increased pressure is extruded into the molding chamber 15c, and the pressure is relatively released in the molding chamber 15c to uniformly disperse the molding material 25a all over the molding chamber 15c.

In this case, because the molding material 25a is extruded into the molding chamber 15c through the plurality of holes 21b arranged uniformly in the main body 21, the pressure of the molding material 25a is relatively released in the molding chamber 15c, and when the foaming agent is to be made to foam, air bubbles are dispersed substantially uniformly all over the molded foam formed in the molding chamber 15c.

Therefore, air bubbles that cause an internal void G to be generated do not collect at the core portion (center portion) of the molded foam formed in the molding chamber 15c, and a molded foam that has air bubbles dispersed uniformly throughout and has strength equivalent to that of a desired non-foamed article can be achieved.

Furthermore, because the molding material 25a to be extruded into the molding chamber 15c is extruded into the molding chamber 15c with its pressure increased, the rate of extruding the molding material 25a into the molding chamber 15c can be increased, and therefore, the molding rate of the molded foam can be increased, allowing the productivity to be enhanced greatly.

Although a mixture of wood meals, thermoplastic resin, pigment, reinforcing agent, and foaming agent is used as the raw-material mixture 25 in the above-described description, the material is not limited to this mixture. Instead, the present invention can be applied to extrusion molding of materials made of various other types of foaming agents.

## Claims

1. An extrusion apparatus in which a molding material is made by heating, kneading, melting, and plasticizing a raw-material mixture including at least foaming agent, comprising:
an extruder that extrudes the molding material from a tip of a screw;
an extrusion die mounted at the tip end of the screw; and
a molding die mounted at an outlet of the extrusion die, wherein
a breaker plate that applies a restraining force counteracting an extrusion force to the molding material extruded from the tip of the screw and that applies a back pressure towards the screw is provided at an outlet of the extrusion die, and
a core that applies a restraining force counteracting an extrusion force to the molding material extruded from the extrusion die and that applies a back pressure to a space at the outlet of the extrusion die is provided at an inlet of the molding die.

2. The extrusion apparatus according to Claim 1, wherein the breaker plate has a volume-reducing section including a plurality of slits or holes whose volumes decrease gradually from the screw towards the molding die, and a back pressure is produced towards the screw by the plurality of slits or holes of the volume-reducing section.

3. The extrusion apparatus according to Claim 1 or 2, wherein the core has a restraining section including a plurality of slits or holes whose volumes decrease gradually from the extrusion die towards the molding die, and the molding material between the core and the outlet in the direction toward the extrusion die has a back pressure applied thereto by the plurality of slits or holes of the restraining section.

4. The extrusion apparatus according to Claim 3, wherein the core has a main body with a cross-sectional shape matching a cross-sectional shape of the inlet of the molding die, and the plurality of slits or holes of the restraining section are provided throughout the entirety of the main body.

5. The extrusion apparatus according to Claim 4, wherein an lead-in portion that introduces the molding material extruded from the extrusion die is provided at the main body of the core, and the plurality of holes or the plurality of slits of the restraining section communicate with the lead-in portion.

6. The extrusion apparatus according to one of Claims 1 to 5, wherein the raw-material mixture is produced by mixing foaming agent with raw material pellets made by melting, kneading, cooling, and size-regulating wood meals, thermoplastic resin, pigment, and reinforcing agent that constitute a raw material of synthetic wood powder.
